# EUROPÄISCHE PATENTSCHRIFT

(11) **EP 3 252 004 B1**
(45) Veröffentlichungstag und Bekanntmachung des Hinweises auf die Patenterteilung: **21.11.2018**
(21) Anmeldenummer: 16172143.6
(22) Anmeldetag: 31.05.2016
(51) Int. Cl.: B67D 7/02, B67D 7/32

(54) **VORRICHTUNG ZUR ENTNAHME VON BRENNSTOFF AUS TANKPATRONEN FÜR BRENNSTOFFZELLEN**
DEVICE FOR TAKING FUEL FROM TANK CARTRIDGES FOR FUEL CELLS
DISPOSITIF DE PRELEVEMENT DE COMBUSTIBLE DANS DES CARTOUCHES DE STOCKAGE POUR CELLULES COMBUSTIBLES

(43) Veröffentlichungstag der Anmeldung: 06.12.2017
(73) Patentinhaber: SFC Energy AG, 85649 Brunnthal (DE)
(72) Erfinder: Meixner, Oliver, 83620 Feldkirchen-Westerham (DE); Wienke, Matthias, 83661 Lenggries (DE); Taschke, Florian, 84424 Isen (DE)
(74) Vertreter: Grünecker Patent- und Rechtsanwälte PartG mbB

(56) Entgegenhaltungen:
- EP-B1- 1 506 936

## Beschreibung

### Gebiet der Erfindung

Die Erfindung betrifft eine Entnahmevorrichtung zur Entnahme von Brennstoff aus einem Brennstoffbehälter für Brennstoffzellen, wobei die Entnahmevorrichtung umfasst: ein Verschlusselement zum Verschließen einer Öffnung des Brennstoffbehälters; eine Brennstoffleitung zum Herstellen einer ersten Fluidverbindung zwischen einer Brennstoffentnahmeöffnung in dem Verschlusselement und einem flüssigen Brennstoff innerhalb des Brennstoffbehälters; einen Auftriebskörper, der zum Schwimmen auf dem flüssigen Brennstoff innerhalb des Brennstoffbehälters geeignet ist; und eine flexible Druckausgleichsleitung zum Herstellen einer zweiten Fluidverbindung zwischen einem Gasbereich innerhalb des Brennstoffbehälters, insbesondere oberhalb des flüssigen Brennstoffs, und einer Druckausgleichsöffnung in dem Verschlusselement; wobei ein Endabschnitt der Druckausgleichsleitung mit dem Auftriebskörper verbunden ist. Dieser Stand der Technik wird in EP 1 506 936 B1 beschrieben.

### Stand der Technik

Brennstoffzellen werden in verschiedenen Bereichen der netzfernen und mobilen Energieversorgung eingesetzt. Der verwendete Treibstoff wird in sogenannten Tankpatronen mitgeführt. Liegt der Brennstoff in flüssiger Form vor, wird zumeist ein mechanischer Aufbau mit einem Entnahmeschlauch und einer Belüftungsöffnung eingesetzt. Die Belüftung muss unabhängig von der Lage der Tankpatrone sicher gestellt sein. Dazu ist die Öffnung mit einem flexiblen Schlauch verbunden, an dessen Ende wiederum ein Auftriebskörper (der sogenannte Schwimmer oder auch als Schwimmkörper bezeichnet) angebracht. Dieser Auftriebskörper stellt sicher, dass das offene Ende des Schlauches innerhalb der Tankpatrone immer in der Gasphase der Patrone gehalten wird. Der Schwimmkörper ist auf der Flüssigkeitsoberfläche frei beweglich.

Werden gefüllte Tankpatronen transportiert bzw. sind sie in mobilen Anwendungen wie z.B. Wohnmobilen oder Segelbooten verbaut, gerät der Auftriebskörper/Schwimmer in Bewegung. Auch unter statischen Bedingungen eines Wohnmobils oder Segelbootes kommt es zu Bewegungen des Flüssigkeitsspiegels z.B. aufgrund von Personenbewegungen oder Wellengang und somit zu einer Bewegung des Auftriebsköpers. Die Bewegung des Auftriebskörpers endet zumeist mit einem Anschlagen des Auftriebskörpers gegen die Wandung der Tankpatrone und es entsteht ein deutlich hörbares Geräusch. Besonders während Ruhe- oder Schlafphasen wird dies als sehr störend wahrgenommen.

Die verwendeten Brennstoffzellensysteme nutzen zudem unterschiedliche Treibstoffarten wie z.B. Methanol-Wassergemisch (auch als Methanol-Premix bezeichnet), Ethanol, Methanol, Ameisensäure, Diesel unterschiedlicher Reinheitsgrade, die wiederum in den entsprechenden Tankpatronen bereitgestellt werden. Derzeit ist es nicht möglich, unterschiedliche Treibstoffarten mit ein und derselben Brennstoffzellentechnik zu verwenden, da eine Erkennung dergleichen fehlt.

Die derzeitig verwendete Ausführung des Verschlusssystems der Tankpatrone lässt keine Unterscheidung zwischen verschiedenen Treibstoffarten zu. Somit besteht bei Verwendung des gleichen Verschlusssystems die Gefahr von Verwechslung (Methanol, Methanol-Premix, Ethanol, etc.).

### Beschreibung der Erfindung

Aufgabe der Erfindung ist es, die genannten Nachteile zumindest teilweise zu überwinden.

Dabei muss berücksichtigt werden, dass für die Tankpatronen standardisierte Gebinde mit definiertem Öffnungsdurchmesser verwendet werden. Deshalb ist die maximal einbringbare Größe des Auftriebsköpers beschränkt. Zu beachten ist weiterhin auch die reduzierte Auftriebskraft durch die zumeist geringe Dichte des verwendeten Treibstoffs. Somit können Änderungen an Bauform und Größe nur sehr beschränkt vorgenommen werden und evtl. zusätzlich eingebrachtes Gewicht muss möglichst gering gehalten werden.

Diese Aufgabe wird gelöst durch eine Entnahmevorrichtung zur Entnahme von Brennstoff aus einem Brennstoffbehälter für Brennstoffzellen nach Anspruch 1.

Die erfindungsgemäße Entnahmevorrichtung umfasst: ein Verschlusselement zum Verschließen einer Öffnung des Brennstoffbehälters; eine Brennstoffleitung zum Herstellen einer ersten Fluidverbindung zwischen einer Brennstoffentnahmeöffnung in dem Verschlusselement und einem flüssigen Brennstoff innerhalb des Brennstoffbehälters; einen Auftriebskörper, der zum Schwimmen auf dem flüssigen Brennstoff innerhalb des Brennstoffbehälters geeignet ist; und eine flexible Druckausgleichsleitung zum Herstellen einer zweiten Fluidverbindung zwischen einem Gasbereich innerhalb des Brennstoffbehälters, insbesondere oberhalb des flüssigen Brennstoffs, und einer Druckausgleichsöffnung in dem Verschlusselement; wobei ein Endabschnitt der Druckausgleichsleitung mit dem Auftriebskörper verbunden ist. Die erfindungsgemäße Entnahmevorrichtung ist dadurch gekennzeichnet, dass der Auftriebskörper mit einer Dämpfungseinrichtung zum Dämpfen von Stößen des Auftriebskörpers mit einer Wand des Brennstoffbehälters versehen ist.

Die erfindungsgemäße Entnahmevorrichtung hat den Vorteil, dass die Bewegungsenergie des Auftriebskörpers bei Erreichen der Brennstoffbehälterwand durch die Dämpfungseinrichtung dämpfend/verformend absorbiert wird und dadurch das ansonsten aufgrund eines Aufpralls (Stoßes) des Auftriebskörpers auf die Wand des Brennstoffbehälters entstehende Geräusch gedämpft wird. Der Auftriebskörper ist in der Regel aus Kunststoff gefertigt und als Hohlkörper ausgebildet, also mit einem gas- bzw. luftgefüllten Hohlraum, wodurch der Auftriebskörper schwimmfähig wird.

Gemäß einer Weiterbildung kann der Auftriebskörper zwei Teilauftriebskörper umfassen zwischen denen der Endabschnitt der Druckausgleichsleitung festgelegt ist, wobei ein offenes Ende der Druckausgleichsleitung im Gebrauch nach oben hervorsteht und wobei die Teilauftriebskörper durch die Dämpfungseinrichtung miteinander verbunden werden. Somit kann ein ansonsten notwendiges Verschweißen der Teilauftriebskörper entfallen.

Die erfindungsgemäße Entnahmevorrichtung kann dahingehend weitergebildet werden, dass die Dämpfungseinrichtung so ausgebildet sein kann, dass bei Verwendung der Entnahmevorrichtung die Dämpfung der Stöße in jede Richtung parallel zur Oberfläche des flüssigen Brennstoffs erfolgt. Auf diese Weise kann bei einem in jede Richtung frei schwimmenden Auftriebskörper ein hartes Anschlagen an die Wand des Brennstoffbehälters vermieden werden. Falls beispielsweise eine Führung des Auftriebskörpers in einer Richtung vorgesehen ist, genügt auch eine Dämpfung an den jeweiligen Endbereichen des Auftriebskörpers, die ansonsten in direkten Kontakt mit der Behälterwand kommen würden.

Ein andere Weiterbildung besteht darin, dass der Auftriebskörper und die Dämpfungseinrichtung als Einheit ausgebildet sein können, insbesondere aus dem gleichen Material gefertigt sein können; oder dass die Dämpfungseinrichtung als separates Element ausgebildet sein kann, das an dem Auftriebskörper angeordnet ist, insbesondere kraftschlüssig an dem Auftriebskörper befestigt sein kann. Als separates Element kann die Dämpfungseinrichtung beispielsweise auf einen vorhandenen Auftriebskörper aufgeschoben und somit nachgerüstet werden.

Gemäß einer anderen Weiterbildung kann die Dämpfungseinrichtung eine Vielzahl von Dämpfungselementen umfassen, wobei insbesondere die Dämpfungselemente horizontal (also parallel zur Flüssigkeitsoberfläche des Brennstoffs) nach außen abstehen können wenn der Auftriebskörper auf dem Brennstoff schwimmt. Mit einer Vielzahl von Dämpfungselementen können die einzelnen Dämpfungselemente klein und/oder flexibel ausgestaltet werden.

Dies kann dahingehend weitergebildet werden, dass die Dämpfungselemente Schlauchabschnitte oder Fortsätze des Auftriebskörpers umfassen können. Die Schlauchabschnitte können auf den Auftriebskörper aufgeklebt oder damit verschweißt sein. Im Falle von Fortsätzen als Dämpfungselemente können diese ebenfalls aufgeklebt oder verschweißt sein, sie können jedoch bei der Fertigung des Auftriebskörpers auch bereits gespritzt oder gezogen werden.

Die Fortsätze des Auftriebskörpers können vorzugsweise stachelförmig oder flächig ausgebildet sein. Stachelförmige Fortsätze haben den Vorteil, dass auch bei leichten Stößen eine Abfederung/Dämpfung durch die spitzen Enden erfolgt, während bei stärkeren Stößen eine weitergehende elastische Verbiegung der stachelförmigen Fortsätze erfolgt, da eine in Richtung des Auftriebskörpers zunehmende Querschnittsfläche der Fortsätze mit größeren Biegekräften einhergeht. Im Falle von flächigen Fortsätzen können diese einen konstante Querschnittsfläche aufweisen, wenn die elastische Verformbarkeit der Elemente zur Dämpfung von Stößen gegeben ist. Jedoch können die flächigen Elemente auch mit nach außen (vom Auftriebskörper weg) abnehmendem Querschnitt ausgebildet sein.

Eine andere Weiterbildung besteht darin, dass die Dämpfungseinrichtung zumindest teilweise flexibel ausgebildet sein können, wobei insbesondere die Dämpfungselemente flexibel ausgebildet sein können, vorzugsweise derart, dass der Auftriebskörper mit der Dämpfungseinrichtung bei einem Überstand der Dämpfungselemente über den Rand der Öffnung des Brennstoffbehälters durch die Öffnung einführbar ist. Auf diese Weise kann der Auftriebskörper in eine Öffnung des Brennstoffbehälters eingeführt werden, z.B. indem sich die Dämpfungselemente elastisch verformen.

Gemäß einer anderen Weiterbildung der erfindungsgemäßen Entnahmevorrichtung oder einer deren Weiterbildungen kann das Verschlusselement eine Kopplungseinrichtung zum Koppeln mit einem Anschlusselement für eine Brennstoffzellenvorrichtung umfassen. Damit kann eine Brennstoffzufuhrleitung der Brennstoffzellenvorrichtung an den Brennstoffbehälter angeschlossen werden.

Die Kopplungseinrichtung kann eine mechanische Kodierung zur Kennzeichnung verschiedener Brennstoffarten aufweisen. Damit können verschiedene Brennstoffarten unterscheiden werden, und es kann insbesondere der in dem Brennstoffbehälter enthaltene Brennstoff durch die Form der mechanischen Kodierung eindeutig gekennzeichnet und identifiziert werden.

Die mechanische Kodierung der Kopplungseinrichtung kann komplementär zu einer mechanischen Kodierung des Anschlusselements ausgebildet sein, wobei die mechanischen Kodierungen derart geformt sein können, dass nur eine Kopplungseinrichtung und ein Anschlusselement mit zueinander komplementären mechanischen Kodierungen zur Brennstoffentnahme miteinander verbindbar sind. Dies hat den Vorteil, dass nur ein zum jeweiligen Brennstoff passendes Anschlusselement mit der Kopplungseinrichtung gekoppelt werden kann.

Eine andere Weiterbildung besteht darin, dass die mechanischen Kodierungen der Kopplungseinrichtung und des Anschlusselements so ausgebildet sein können, dass eine Kopplungseinrichtung und ein Anschlusselement, bei denen die Kodierung nicht zueinander komplementär sind, nicht miteinander verbunden werden können. Auf diese Weise kann ein versehentliches Zuführen von ungeeignetem Brennstoff zur Brennstoffzellenvorrichtung vermieden werden.

Die Kopplungseinrichtung kann dahingehend weitergebildet werden, dass die mechanische Kodierung der Kopplungseinrichtung konzentrische Kreise umfasst, die als Materialerhebungen und/oder Materialsenkungen ausgebildet sein können. Die stellt eine einfach zu realisierende Möglichkeit der mechanischen Kodierung bereit.

Die erfindungsgemäße Entnahmevorrichtung oder eine deren Weiterbildungen kann dahingehend weitergebildet werden, dass das Verschlusselement eine Ventileinrichtung zum Verschließen der Brennstoffentnahmeöffnung aufweisen kann, und wobei die Brennstoffentnahmeöffnung durch ein Betätigen der Ventileinrichtung geöffnet werden kann, insbesondere durch ein Betätigen mit einem Öffnungselement des Anschlusselements. Somit kann das Ventil bei einem Anschließen des Anschlusselements an das Verschlusselement geöffnet werden.

Dabei kann die Brennstoffzellenvorrichtung für den Betrieb mit einem vorbestimmten Brennstoff geeignet sein, und das Anschlusselement kann mit der Kopplungseinrichtung der Entnahmevorrichtung verbindbar sein und eine mechanische Kodierung aufweisen, die für den vorbestimmten Brennstoff eindeutig ist. Somit kann der Brennstoffzellenvorrichtung nur der vorbestimmte Brennstoff zugeführt werden.

Die mechanische Kodierung des Anschlusselements kann konzentrische Kreise umfassen, die als Materialerhebungen und/oder Materialsenkungen ausgebildet sind.

Die konzentrischen Kreise können gleichzeitig als Führung beim Anschlussvorgang dienen.

Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine erste Ausführungsform der erfindungsgemäßen Entnahmevorrichtung.
- Fig. 2 A,B,C,D,E: zeigt eine zweite Ausführungsform der erfindungsgemäßen Entnahmevorrichtung.
- Fig. 3 A,B: zeigt eine dritte Ausführungsform der erfindungsgemäßen Entnahmevorrichtung.
- Fig. 4 A,B,C: zeigt Beispiele für die dritte Ausführungsform der erfindungsgemäßen Entnahmevorrichtung.
- Fig. 5 A,B: zeigt eine vierte Ausführungsform der erfindungsgemäßen Entnahmevorrichtung mit einer mechanischen Kodierung.
- Fig. 6 A,B,C,D: zeigt Beispiele für die vierte Ausführungsform der erfindungsgemäßen Entnahmevorrichtung.

### Ausführungsformen

In den Zeichnungen bezeichnen - falls nicht anders angegeben - gleiche Bezugszeichen gleiche Komponenten.

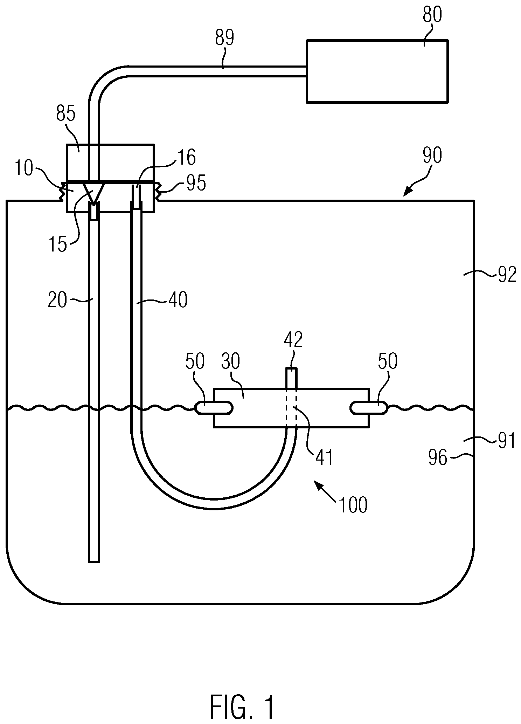

Fig. 1 zeigt eine erste Ausführungsform der erfindungsgemäßen Entnahmevorrichtung.

Die erfindungsgemäße Entnahmevorrichtung 100 umfasst ein Verschlusselement 10 zum Verschließen einer Öffnung 95 eines Brennstoffbehälters 90; eine Brennstoffleitung 20 zum Herstellen einer ersten Fluidverbindung zwischen einer Brennstoffentnahmeöffnung 15 in dem Verschlusselement 10 und einem flüssigen Brennstoff 91 innerhalb des Brennstoffbehälters 90; einen Auftriebskörper 30, der zum Schwimmen auf dem flüssigen Brennstoff 91 innerhalb des Brennstoffbehälters 90 geeignet ist; und eine flexible Druckausgleichsleitung 40 zum Herstellen einer zweiten Fluidverbindung zwischen einem Gasraum 92 innerhalb des Brennstoffbehälters 90 (oberhalb des Bereichs mit flüssigem Brennstoffs 91) und einer Druckausgleichsöffnung 16 in dem Verschlusselement 10; wobei ein Endabschnitt 41 der Druckausgleichsleitung 40 mit dem Auftriebskörper 30 verbunden ist. Der Endabschnitt 41 ist so angeordnet, dass ein offenes Ende 42 der Druckausgleichsleitung 40 in den Gasraum 92 ragt. Weiterhin umfasst die erfindungsgemäße Entnahmevorrichtung 100 am Auftriebskörper 30 eine Dämpfungseinrichtung 50 zum Dämpfen von Stößen des Auftriebskörpers 30 mit einer Wand 96 des Brennstoffbehälters 90. Der Auftriebskörper ist aus einem vergleichweise harten Kunststoff gefertigt, weshalb Stöße an die Innenwand 96 des Brennstoffbehälters zu störenden Geräusche führen. Die Dämpfungseinrichtung 50 besteht hier beispielhaft aus flexiblen Silikonelementen, die an den Ecken des hier rechteckigen Auftriebskörpers 30 befestigt sind.

Über die Brennstoffentnahmeöffnung 15 und ein Anschlusselement 85 kann der flüssige Brennstoff 91 aus dem Brennstoffbehälter 90 (Tankpatrone) entnommen werden und über eine Zuführleitung 89 einer Brennstoffzellenvorrichtung 80 zugeführt werden. Über die Druckausgleichsleitung 40 kann eine Druckausgleich zwischen dem Raum innerhalb und dem Raum außerhalb des Brennstoffbehälters 90 erfolgen.

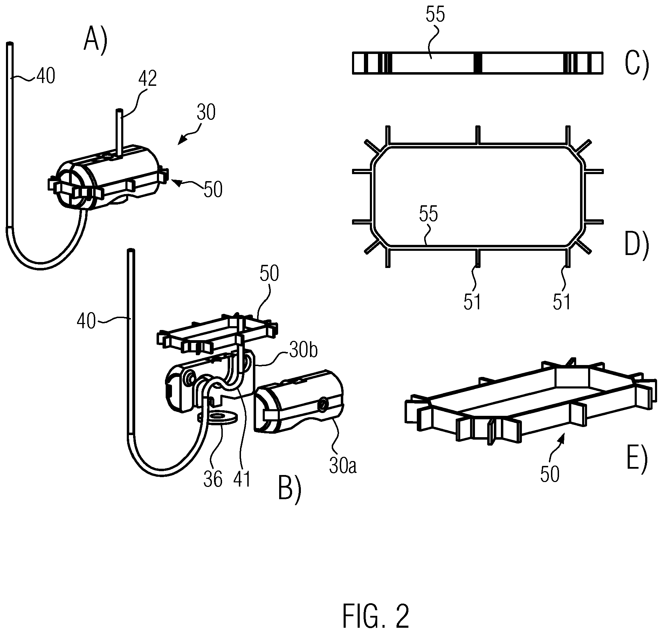

Fig. 2 zeigt eine zweite Ausführungsform der erfindungsgemäßen Entnahmevorrichtung.

In dieser Ausführungsform ist der Auftriebskörper 30 zweiteilig als erster und zweiter Teilauftriebskörper 30a, 30b ausgebildet. Der Endbereich 41 der Druckausgleichsleitung 40 ist zwischen den beiden Teilauftriebskörpern 30a, 30b angeordnet. Die Dämpfungseinrichtung 50 besteht hier aus einem ringförmigen Abschnitt 55 als Träger für Dämpfungselemente 51, die umlaufend vorgesehen sind. Der ringförmige Abschnitt 55 kann kraftschlüssig über den aus den Teilauftriebskörpern zusammengesetzten Auftriebskörper 30 gezogen werden. Das Material der Dämpfungseinrichtung 50 (Abschnitt 55 sowie Elemente 51) sind aus elastischem Material gefertigt, beispielsweise Silikon oder Gummi. Die Dämpfungselemente 51 sind flächenförmig ausgebildet und verbiegen sich elastisch, wenn ein Stoß gegen eine innere Wand 96 des Brennstoffbehälters 90. Auf diese Weise wird eine Geräuschdämpfung erzielt.

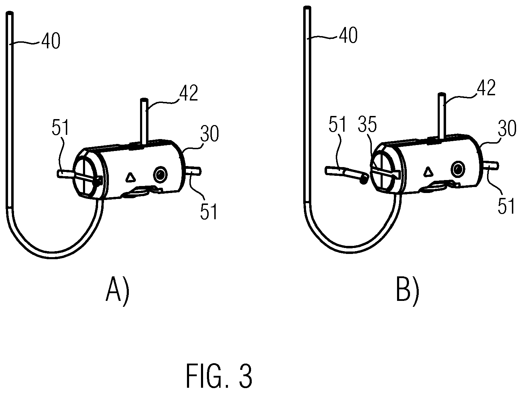

Fig. 3 zeigt eine dritte Ausführungsform, in der die Dämpfungselemente 51 aus flexiblen Schlauchabschnitten 51 gebildet werden, beispielsweise aus Silikon. Im gezeigten Beispiel sind zwei solche Abschnitte in einer jeweiligen Nut 35 an zwei gegenüberliegenden Seiten des Auftriebskörpers 30 angeordnet. Die Enden der Schlauchabschnitte 51 stehen so weit von dem Auftriebskörper 30 ab, dass gewährleistet ist, dass er in keiner Richtung direkt an die Wand des Brennstoffbehälters stoßen kann, sondern nur die Enden der Schlauchabschnitte 51.

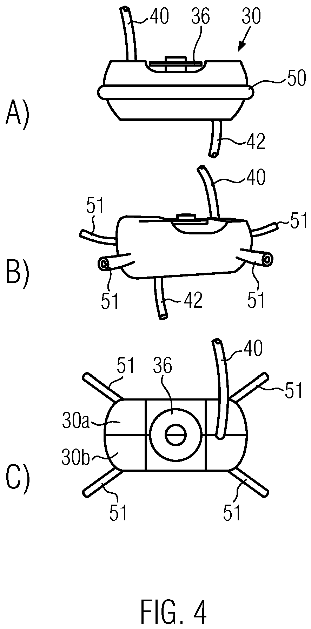

Fig. 4 zeigt eine konkrete Ausgestaltung des Auftriebskörpers mit Dämpfungselementen. Der Ring 36 hält die beiden Teilauftriebskörper zusammen und dient gleichzeitig als Senklot/Gewicht, um den Auftriebskörper 30 in eine Lage zu bringen bzw. in einer Lage zu stabilisieren, in der das offene Ende 42 der Druckausgleichsleitung 40 in den Gasraum 92 ragt (siehe auch Fig. 2). Im oberen Bild (Fig. 4A) ist ein um den Auftriebskörper umlaufender Schlauchabschnitt 50 als Dämpfungseinrichtung vorgesehen. In den beiden anderen Bildern (Fig. 4B,C) ist die Dämpfungseinrichtung in Form von vier Dämpfungselementen (Schlauchabschnitte) 51 ausgebildet, die an den jeweiligen Ecken des in Draufsicht im Wesentlichen rechteckigen Auftriebskörpers angeordnet sind. Diese können mittels Wärmezufuhr angeschweißt sein. Eine andere Möglichkeit ist es, die Schlauchabschnitte an den Eckbereichen des Auftriebskörpers zwischen den Teilauftriebskörpern einzuklemmen oder sie auf vom Auftriebskörper hervorstehenden Nasen aufzuschieben.

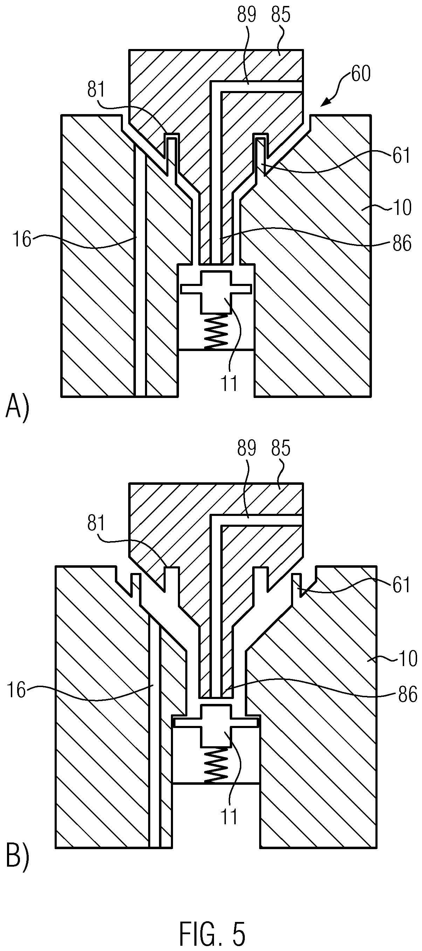

In Fig. 5 ist dargestellt, dass das Verschlusselement 10 eine Kopplungseinrichtung 60 zum Koppeln mit dem Anschlusselement 85 für eine Brennstoffzellenvorrichtung umfasst. Damit kann eine Brennstoffzufuhrleitung der Brennstoffzellenvorrichtung an den Brennstoffbehälter angeschlossen werden. Die Kopplungseinrichtung umfasst eine mechanische Kodierung zur Kennzeichnung verschiedener Brennstoffarten. Damit können verschiedene Brennstoffarten unterscheiden werden, und es kann insbesondere der in dem Brennstoffbehälter enthaltene Brennstoff durch die Form der mechanischen Kodierung eindeutig gekennzeichnet und identifiziert werden.

Die mechanische Kodierung 61 der Kopplungseinrichtung 60 ist komplementär zu einer mechanischen Kodierung 81 des Anschlusselements 85 ausgebildet sein, wobei die mechanischen Kodierungen derart geformt sind, dass nur eine Kopplungseinrichtung und ein Anschlusselement mit zueinander komplementären mechanischen Kodierungen zur Brennstoffentnahme miteinander verbindbar sind. Dies hat den Vorteil, dass nur ein zum jeweiligen Brennstoff passendes Anschlusselement mit der Kopplungseinrichtung gekoppelt werden kann. Die mechanische Kodierung 61 der Kopplungseinrichtung umfasst einen konzentrischen Kreis 61, der als Materialerhebungen ausgebildet ist. Die komplementäre mechanische Kodierung 81 des Anschlusselements weist eine Materialsenkung 81 auf.

Das Verschlusselement 10 beinhaltet ein Ventil 11 zum Verschließen der Brennstoffentnahmeöffnung, das durch ein Betätigen mit einem Öffnungselement 86 des Anschlusselements 85 geöffnet werden kann. Das Ventil kann jedoch nur mittels Anschließen des passenden, komplementären Anschlusselements 85 an das Verschlusselement 10 geöffnet werden (obere Darstellung, Fig. 5A). Anderenfalls ist ein Öffnen des Ventils 11 und eine anschließende Brennstoffentnahme nicht möglich (untere Darstellung, Fig. 5B). Somit kann der Brennstoffzellenvorrichtung nur der vorbestimmte Brennstoff zugeführt werden.

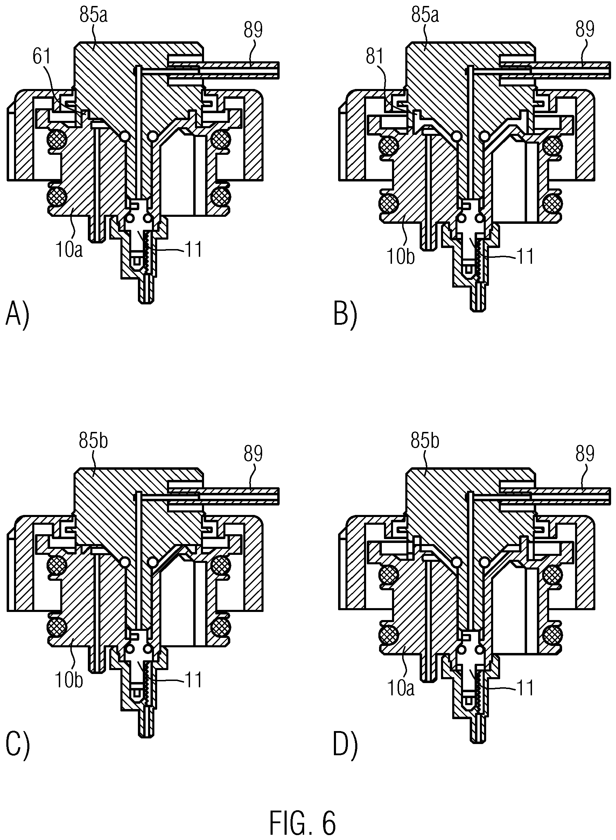

Fig. 6 zeigt eine weitere konkrete Ausgestaltung des Verschlusselements und des Anschlusselements für zwei verschiedene Brennstoffarten und die entsprechenden mechanischen Kodierungen. Die Abbildung oben links (Fig. 6A) zeigt einen Anschlusselement 85a zur Entnahme eines Premix-Brennstoffs auf einem Verschlusselement 10a für einen Premix-Brennstoffbehälter, die komplementär zueinander ausgebildet sind, so dass das Ventil 11 geöffnet wird. Die Abbildung oben rechts (Fig. 6B) zeigt das Anschlusselement 85a auf einem Verschlusselement 10b für einen Methanol-Brennstoffbehälter, wobei das Ventil 11 nicht geöffnet wird. Die Abbildung unten links (Fig. 6C) zeigt einen Anschlusselement 85b zur Entnahme von Methanol-Brennstoff auf dem Verschlusselement 10b für den Methanol-Brennstoffbehälter, die komplementär zueinander ausgebildet sind, so dass das Ventil 11 geöffnet wird. Die Abbildung unten rechts (Fig. 6D) zeigt das Anschlusselement 85b für Methanol auf dem Verschlusselement 10a für Premix, wobei das Ventil 11 nicht geöffnet wird.

Zusammenfassend: Es wird vorgeschlagen, den verwendeten Auftriebskörper um ein dämpfendes Element dahingehend zu erweitern, dass die Bewegungsenergie des Auftriebskörpers bei Erreichen der Tankpatronenwandung dämpfend/verformend absorbiert wird und dadurch das entstehende Geräusch (Hohlkörper auf Körper) nahezu eliminiert wird. Das Dämpfungselement ist vorzugsweise so ausgeführt, dass über die gesamte horizontale Linie parallel zur Flüssigkeitslinie sichergestellt ist, dass eine harte Berührung von Auftriebskörper und Gebinde unterbunden wird. Als Dämpfungselement können z.B. Abschnitte von Silikonschläuchen oder ähnliches verwendet werden. Auch eine Ausführung mittels angespritzter sehr dünn ausgeführten und somit flexiblen Stacheln/Flächen aus dem verwendeten Kunststoffmaterials des Auftriebskörpers ist denkbar.

Weiter wird die Bauform so ausgeführt, dass das Dämpfungselement flexibel ausgeführt wird. Dadurch ist ein Einbringen des Auftriebskörpers in räumlich beengte Gebindeöffnungen auch bei Überstand des Dämpfers möglich, um somit das Auftriebsvolumen auf dem benötigtem Mindestmaß zu halten.

Eine Kodierung des Zwischendeckels soll kostengünstig mittels einer mechanischen Ausführung so erfolgen, dass ein fehlerhaftes Anschließen die Entnahme von falschem Treibstoff verhindert wird (Schlüssel-Schloss). Um die Orientierung des Anschlusses an die Tankpatrone zu gestalten, wird eine Kodierung über konzentrisch angeordnete Kreise in Form von Materialerhebungen und -senkungen vorgeschlagen. Dies kann z.B. leicht in einem Wechseleinsatz eines möglichen Spritzgusswerkzeuges erfolgen. Die Anzahl an Kodierringen gibt die Anzahl an möglichen Treibstoffen vor. Eine sensorische Kodierung ist nachteilig, da nicht immer sichergestellt werden kann, dass immer Kommunikation besteht, oder es erfordert eine so hohe Komplexität, dass die Systemkosten deutlich ansteigen würden.

Der Vorteil der Erfindung ist eine Reduzierung der Geräuschentwicklung. Weiterhin kann ein Anschluss von falschem Treibstoff sicher verhindert werden, so dass bei Verwendung des bewährten Verschlusssystems für diverse flüssige Treibstoffarten gleichzeitig Verwechslungen der Treibstoffart unterbunden werden.

Die dargestellten Ausführungsformen sind lediglich beispielhaft und der vollständige Umfang der vorliegenden Erfindung wird durch die Ansprüche definiert.

## Patentansprüche

1. Entnahmevorrichtung (100) zur Entnahme von Brennstoff aus einem Brennstoffbehälter (90) für Brennstoffzellen, wobei die Vorrichtung umfasst:
ein Verschlusselement (10, 10a, 10b) zum Verschließen einer Öffnung (95) des Brennstoffbehälters;
eine Brennstoffleitung (20) zum Herstellen einer ersten Fluidverbindung zwischen einer Brennstoffentnahmeöffnung (15) in dem Verschlusselement und einem flüssigen Brennstoff (91) innerhalb des Brennstoffbehälters;
einen Auftriebskörper (30, 30a, 30b), der zum Schwimmen auf dem flüssigen Brennstoff innerhalb des Brennstoffbehälters geeignet ist; und
eine flexible Druckausgleichsleitung (40) zum Herstellen einer zweiten Fluidverbindung zwischen einem Gasbereich (92) innerhalb des Brennstoffbehälters, insbesondere oberhalb einer Oberfläche des flüssigen Brennstoffs, und einer Druckausgleichsöffnung (16) in dem Verschlusselement;
wobei ein Endabschnitt (41) der Druckausgleichsleitung mit dem Auftriebskörper verbunden ist; und
wobei die Entnahmevorrichtung **dadurch gekennzeichnet ist, dass**
der Auftriebskörper (30) mit einer Dämpfungseinrichtung (50) zum Dämpfen von Stößen des Auftriebskörpers (30) mit einer Wand (96) des Brennstoffbehälters (90) versehen ist.

2. Entnahmevorrichtung nach Anspruch 1, wobei der Auftriebskörper zwei Teilauftriebskörper (30a, 30b) umfasst zwischen denen der Endabschnitt der Druckausgleichsleitung festgelegt ist, und ein offenes Ende (42) der Druckausgleichsleitung im Gebrauch nach oben hervorsteht, wobei die Teilauftriebskörper (30a, 30b) vorzugsweise durch die Dämpfungseinrichtung (50) miteinander verbunden sind.

3. Entnahmevorrichtung nach Anspruch 1 oder 2, wobei die Dämpfungseinrichtung (50) so ausgebildet ist, dass bei Verwendung der Entnahmevorrichtung ein Dämpfen der Stöße in jede Richtung parallel zur Oberfläche des flüssigen Brennstoffs erfolgt.

4. Entnahmevorrichtung nach einem der Ansprüche 1 bis 3, wobei der Auftriebskörper (30) und die Dämpfungseinrichtung (50) als Einheit ausgebildet sind, insbesondere aus dem gleichen Material gefertigt sind; oder wobei die Dämpfungseinrichtung (50) als separates Element ausgebildet ist, das an dem Auftriebskörper (30) angeordnet ist, insbesondere kraftschlüssig an dem Auftriebskörper befestigt ist.

5. Entnahmevorrichtung nach einem der Ansprüche 1 bis 4, wobei die Dämpfungseinrichtung (50) eine Vielzahl von Dämpfungselementen (51) umfasst, insbesondere wobei die Dämpfungselemente horizontal nach außen abstehen wenn der Auftriebskörper auf dem Brennstoff schwimmt.

6. Entnahmevorrichtung nach Anspruch 5, wobei die Dämpfungselemente (51) Schlauchabschnitte (51) umfassen, wobei die Schlauchabschnitte insbesondere mit einem Ende an dem Auftriebskörper (30) befestigt sind, vorzugsweise zwischen zwei Teilauftriebskörper (30a, 30b) des Auftriebskörpers geklemmt angeordnet sind oder wobei die Schlauchabschnitte (51) insbesondere in Nuten (35) an einer Außenseite des Auftriebskörpers befestigt; oder wobei die Dämpfungselemente (51) Fortsätze des Auftriebskörpers umfassen, wobei die Fortsätze des Auftriebskörpers vorzugsweise stachelförmig oder flächig ausgebildet sind.

7. Entnahmevorrichtung nach einem der Ansprüche 1 bis 6, wobei die Dämpfungseinrichtung (50) zumindest teilweise flexibel ausgebildet ist, insbesondere wobei die Dämpfungselemente (51) flexibel ausgebildet sind, vorzugsweise derart, dass der Auftriebskörper (30) mit der Dämpfungseinrichtung (50) bei einem Überstand der Dämpfungselemente über den Rand der Öffnung (95) des Brennstoffbehälters durch die Öffnung einführbar ist.

8. Entnahmevorrichtung nach einem der Ansprüche 1 bis 7, wobei das Verschlusselement (10, 10a, 10b) eine Kopplungseinrichtung (60) zum Koppeln mit einem Anschlusselement (85, 85a, 85b) für eine Brennstoffzellenvorrichtung gemäß Anspruch 14 umfasst.

9. Entnahmevorrichtung nach Anspruch 8, wobei die Kopplungseinrichtung (60) eine mechanische Kodierung (61) zur Kennzeichnung verschiedener Brennstoffarten aufweist.

10. Entnahmevorrichtung nach Anspruch 9, wobei die mechanische Kodierung (61) der Kopplungseinrichtung (60) komplementär zu einer mechanischen Kodierung (81) des Anschlusselements (85, 85a, 85b) ausgebildet ist, wobei die mechanischen Kodierungen derart geformt sind, dass nur eine Kopplungseinrichtung und ein Anschlusselement mit zueinander komplementären mechanischen Kodierungen zur Brennstoffentnahme miteinander verbindbar sind.

11. Entnahmevorrichtung nach einem der Ansprüche 8 bis 10, wobei die mechanischen Kodierungen (61, 81) der Kopplungseinrichtung und des Anschlusselements so ausgebildet sind, dass eine Kopplungseinrichtung und ein Anschlusselement, bei denen die Kodierung nicht zueinander komplementär sind, nicht miteinander verbunden werden können.

12. Entnahmevorrichtung nach einem der Ansprüche 8 bis 11, wobei die mechanische Kodierung (61) der Kopplungseinrichtung (60) einen oder mehrere konzentrische Kreise (61) umfasst, die als Materialerhebungen und/oder Materialsenkungen ausgebildet sind.

13. Entnahmevorrichtung nach einem der Ansprüche 1 bis 12, wobei das Verschlusselement (10, 10a, 10b) eine Ventileinrichtung (11) zum Verschließen der Brennstoffentnahmeöffnung (15) aufweist, und wobei die Brennstoffentnahmeöffnung durch ein Betätigen der Ventileinrichtung geöffnet werden kann, insbesondere in Kombination mit einem der Ansprüche 8 bis 12 durch ein Betätigen mit einem Öffnungselement (86) des Anschlusselements (85).

14. Anschlusselement für eine Brennstoffzellenvorrichtung, wobei die Brennstoffzellenvorrichtung für den Betrieb mit einem vorbestimmten Brennstoff geeignet ist, und wobei das Anschlusselement (85, 85a, 85b) mit der Kopplungseinrichtung (60) der Entnahmevorrichtung gemäß einem der Ansprüche 8 bis 13 verbindbar ist und eine mechanische Kodierung (61) aufweist, die für den vorbestimmten Brennstoff eindeutig ist.

15. Anschlusselement nach Anspruch 14, wobei die mechanische Kodierung (81) des Anschlusselements (85) einen oder mehrere konzentrische Kreise (81) umfasst, die als Materialerhebungen und/oder Materialsenkungen ausgebildet sind.

## Claims

1. Removal device (100) for removing fuel from a fuel container (90) for fuel cells, the device comprising:
a closure element (10, 10a, 10b) for closing an opening (95) of the fuel container;
a fuel line (20) for establishing a first fluid connection between a fuel removal opening (15) in the closure element and a liquid fuel (91) within the fuel container;
a buoyancy body (30, 30a, 30b) adapted to float on the liquid fuel within the fuel container; and
a flexible pressure equalization line (40) for establishing a second fluid connection between a gas region (92) within the fuel container, in particular above a surface of the liquid fuel, and a pressure equalization opening (16) in the closure element;
wherein an end section (41) of the pressure equalization line is connected to the buoyancy body; and
wherein the removal device is **characterized in that**
the buoyancy body (30) is provided with a damping device (50) for damping impacts of the buoyancy body (30) against a wall (96) of the fuel container (90).

2. Removal device according to claim 1, wherein the buoyancy body comprises two partial buoyancy bodies (30a, 30b) between which the end section of the pressure equalization line is fixed, and an open end (42) of the pressure equalization line projects upwards during use, wherein the partial buoyancy bodies (30a, 30b) are preferably connected to each other by the damping device (50).

3. Removal device according to claim 1 or 2, wherein the damping device (50) is configured such that, when the removal device is used, the impacts are damped in any direction parallel to the surface of the liquid fuel.

4. Removal device according to one of claims 1 to 3, wherein the buoyancy body (30) and the damping device (50) are configured as a unit, in particular are made of the same material; or wherein the damping device (50) is configured as a separate element which is arranged on the buoyancy body (30), in particular is fastened in a force-fit manner to the buoyancy body.

5. Removal device according to one of claims 1 to 4, wherein the damping device (50) comprises a plurality of damping elements (51), in particular wherein the damping elements project horizontally outwards when the buoyancy body floats on the fuel.

6. Removal device according to claim 5, wherein the damping elements (51) comprise hose sections (51), wherein the hose sections are fastened in particular with one end to the buoyancy body (30), are preferably arranged clamped between two partial buoyancy bodies (30a, 30b) of the buoyancy body, or wherein the hose sections (51) are fastened in particular in grooves (35) to an outside of the buoyancy body; or wherein the damping elements (51) comprise extensions of the buoyancy body, wherein the extensions of the buoyancy body are preferably configured to be spiky or flat.

7. Removal device according to one of claims 1 to 6, wherein the damping device (50) is configured to be at least partially flexible, in particular wherein the damping elements (51) are configured to be flexible, preferably such that the buoyancy body (30) with the damping device (50) can be introduced through the opening if the damping elements project beyond the edge of the opening (95) of the fuel container.

8. Removal device according to one of claims 1 to 7, wherein the closure element (10, 10a, 10b) comprises a coupling device (60) for coupling to a connection element (85, 85a, 85b) for a fuel cell device according to claim 14.

9. Removal device according to claim 8, wherein the coupling device (60) comprises a mechanical coding (61) for marking different fuel types.

10. Removal device according to claim 9, wherein the mechanical coding (61) of the coupling device (60) is configured to be complementary to a mechanical coding (81) of the connection element (85, 85a, 85b), wherein the mechanical codings are formed in such a way that only a coupling device and a connection element with mutually complementary mechanical codings can be connected to each other for fuel removal.

11. Removal device according to one of claims 8 to 10, wherein the mechanical codings (61, 81) of the coupling device and the connection element are configured such that a coupling device and a connection element in which the codings are not complementary to each other cannot be connected to each other.

12. Removal device according to one of claims 8 to 11, wherein the mechanical coding (61) of the coupling device (60) comprises one or more concentric circles (61) formed as material elevations and/or material depressions.

13. Removal device according to one of claims 1 to 12, wherein the closure element (10, 10a, 10b) has a valve device (11) for closing the fuel removal opening (15), and wherein the fuel removal opening can be opened by actuating the valve device, in particular in combination with one of claims 8 to 12 by actuation with an opening element (86) of the connection element (85).

14. Connection element for a fuel cell device, wherein the fuel cell device is suitable for operation with a predetermined fuel, and wherein the connection element (85, 85a, 85b) is connectable to the coupling device (60) of the removal device according to one of claims 8 to 13 and comprises a mechanical coding (61) which is unique to the predetermined fuel.

15. Connection element according to claim 14, wherein the mechanical coding (81) of the connection element (85) comprises one or more concentric circles (81) which are configured as material elevations and/or material depressions.

## Revendications

1. Dispositif de soutirage (100) pour soutirer du combustible dans un réservoir de combustible (90) pour piles à combustible, le dispositif comprenant :
un élément de fermeture (10, 10a, 10b) pour fermer une ouverture (95) du réservoir de combustible ;
une conduite de combustible (20) pour établir une première liaison fluidique entre une ouverture de soutirage de combustible (15) dans l'élément de fermeture et un combustible liquide (91) à l'intérieur du réservoir de combustible ;
un corps flottant (30, 30a, 30b), qui est adapté à surnager sur le combustible liquide à l'intérieur du réservoir de combustible ; et
une conduite de compensation de pression(40) pour établir une deuxième liaison fluidique entre une zone de gaz (92) à l'intérieur du réservoir de combustible, notamment au-dessus d'une surface supérieure du combustible liquide, et une ouverture de compensation de pression (16) dans l'élément de fermeture ;
un tronçon d'extrémité (41) de la conduite de compensation de pression étant relié au corps flottant ; et
le dispositif de soutirage étant **caractérisé en ce que** le corps flottant (30) est muni d'un dispositif d'amortissement (50) pour amortir des chocs du corps flottant (30) contre une paroi (96) du réservoir de combustible (90).

2. Dispositif de soutirage selon la revendication 1, dans lequel le corps flottant comprend deux corps flottants partiels (30a, 30b) entre lesquels est fixé le tronçon d'extrémité de la conduite de compensation de pression, et une extrémité ouverte (42) de la conduite de compensation de pression fait saillie vers le haut en service, les corps flottants partiels (30a, 30b) étant de préférence reliés mutuellement par le dispositif d'amortissement (50).

3. Dispositif de soutirage selon la revendication 1 ou la revendication 2, dans lequel le dispositif d'amortissement (50) est conçu de manière telle que lors de l'utilisation du dispositif de soutirage, il se produise un amortissement des chocs dans chaque direction parallèlement à la surface supérieure du combustible liquide.

4. Dispositif de soutirage selon l'une des revendications 1 à 3, dans lequel le corps flottant (30) et le dispositif d'amortissement (50) sont réalisés sous la forme d'une unité, et sont notamment fabriqués en le même matériau ; ou bien dans lequel le dispositif d'amortissement (50) est réalisé en tant qu'élément séparé, qui est agencé sur le corps flottant (30), en étant notamment fixé par adhérence au corps flottant.

5. Dispositif de soutirage selon l'une des revendications 1 à 4, dans lequel le dispositif d'amortissement (50) comporte un grand nombre d'éléments d'amortissement (51), notamment dans lequel les éléments d'amortissement font saillie horizontalement vers l'extérieur lorsque le corps flottant surnage sur le combustible.

6. Dispositif de soutirage selon la revendication 5, dans lequel les éléments d'amortissement (51) comprennent des tronçons de tuyau souple (51), les tronçons de tuyau souple étant notamment fixés par une extrémité, au corps flottant (30), et notamment agencés de manière à être serrés entre deux corps flottants partiels (30a, 30b) du corps flottant, ou bien dans lequel les tronçons de tuyau souple (51) sont notamment fixés dans des rainures (35) sur un côté extérieur du corps flottant ; ou bien dans lequel les éléments d'amortissement (51) comprennent des prolongements du corps flottant, les prolongements du corps flottant étant de préférence d'une configuration en forme d'épine ou de forme plate.

7. Dispositif de soutirage selon l'une des revendications 1 à 6, dans lequel le dispositif d'amortissement (50) est d'une configuration au moins partiellement flexible, notamment dans lequel les éléments d'amortissement (51) sont d'une configuration flexible, de préférence de façon telle, que le corps flottant (30) avec le dispositif d'amortissement (50), dans le cas d'un dépassement des éléments d'amortissement au-delà du bord de l'ouverture (95) du réservoir de combustible, puisse être introduit à travers ladite ouverture.

8. Dispositif de soutirage selon l'une des revendications 1 à 7, dans lequel l'élément de fermeture (10, 10a, 10b) comprend un dispositif de couplage (60) destiné à assurer un couplage avec un élément de raccordement (85, 85a, 85b) pour un dispositif de pile à combustible conformément à la revendication 14.

9. Dispositif de soutirage selon la revendication 8, dans lequel le dispositif de couplage (60) présente un codage mécanique (61) pour la caractérisation de différents types de combustible.

10. Dispositif de soutirage selon la revendication 9, dans lequel le codage mécanique (61) du dispositif de couplage (60) est réalisé de manière à être complémentaire d'un codage mécanique (81) de l'élément de raccordement (85, 85a, 85b), les codages mécaniques étant conçus de manière telle, que seul un dispositif de couplage et un élément de raccordement comportant des codages mécaniques mutuellement complémentaire puissent être couplés l'un à l'autre pour le soutirage de combustible.

11. Dispositif de soutirage selon l'une des revendications 8 à 10, dans lequel les codages mécaniques (61, 81) du dispositif de couplage et de l'élément de raccordement sont configurés de manière telle, qu'un dispositif de couplage et un élément de raccordement pour lesquels les codages ne sont pas mutuellement complémentaires, ne puissent pas être reliés l'un à l'autre.

12. Dispositif de soutirage selon l'une des revendications 8 à 11, dans lequel le codage mécanique (61) du dispositif de couplage (60) comporte un ou plusieurs cercles concentriques (61), qui sont réalisés sous la forme de proéminences de matière et/ou de creux de matière.

13. Dispositif de soutirage selon l'une des revendications 1 à 12, dans lequel l'élément de fermeture (10, 10a, 10b) comporte un dispositif de valve (11) pour la fermeture de l'ouverture de soutirage de combustible (15), et dans lequel l'ouverture de soutirage de combustible peut être ouverte par l'actionnement du dispositif de valve, notamment en combinaison avec l'une des revendications 8 à 12, par un actionnement avec un élément d'ouverture (86) de l'élément de raccordement (85).

14. Elément de raccordement pour un dispositif de pile à combustible, le dispositif de pile à combustible étant adapté pour fonctionner avec un combustible prédéterminé, et l'élément de raccordement (85, 85a, 85b) pouvant être raccordé au dispositif de couplage (60) du dispositif de soutirage selon l'une des revendications 8 à 13, et présentant un codage mécanique (61) qui est univoque pour le combustible prédéterminé.

15. Elément de raccordement selon la revendication 14, le codage mécanique (61) de l'élément de raccordement (85) comportant un ou plusieurs cercles concentriques (81), qui sont réalisés sous la forme de proéminences de matière et/ou de creux de matière.
